(19) **Europäisches Patentamt**

**European Patent Office**

**Office européen des brevets**

(11) **EP 1 391 778 A1**

(12) **EUROPEAN PATENT APPLICATION**

(43) Date of publication:
**25.02.2004 Bulletin 2004/09**

(51) Int Cl.⁷: **G03B 21/53**, G02B 7/30,
G01C 3/10, H04N 5/74,
G03B 7/28

(21) Application number: **03017900.6**

(22) Date of filing: **05.08.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **08.08.2002 JP 2002231527
30.08.2002 JP 2002253401
19.02.2003 JP 2003041202**

(71) Applicant: **Seiko Precision Inc.
Narashino-shi, Chiba-ken (JP)**

(72) Inventors:
• **Kanemitsu, Shiroshi
Narashino-shi Chiba-ken (JP)**
• **Okuyama, Hirobumi
Narashino-shi Chiba-ken (JP)**

(74) Representative: **Grünecker, Kinkeldey,
Stockmair & Schwanhäusser Anwaltssozietät
Maximilianstrasse 58
80538 München (DE)**

(54) **Apparatus for detecting the inclination angle of a projection screen and projector comprising the same**

(57) [Problem] To provide a simple-structured angle detecting apparatus and a projector utilizing a line-type passive range-finding device for use on the camera or the like.

[Means for Resolution] A control circuit (5) computes a relative horizontal inclination angle between a screen (1) and a projector (2) on the basis of range-finding computing results achieved by a line-type passive range-finding device (3), and a relative vertical inclination angle between a screen (1) and a projector (2) on the basis of range-finding computing results achieved by a line-type passive range-finding device (4). A display driving section (7) adjusts a projection optical system (8) including a condensing lens on the basis of the vertical and the horizontal inclination angles computed by the control circuit (5), thereby correcting for a keystone distortion in an image projected.

**FIG.1**

## Description

[Detailed Description of the Invention]

[Technical Field of the Invention]

The present invention relates to an angle detecting apparatus using a line-type passive range-finding device and a projector having the same.

[Prior Art]

Conventionally, in the case of using a projector such as a liquid-crystal projector, there is a disadvantage to cause distortion in a projection image, called keystone distortion, due to a positional relationship of both the projector and the screen. As the technique for correcting keystone distortion, there are generally two methods, including an electric correcting method of generating an image having a keystone distortion reverse to a projection image in a video circuit within the projector and project it, and an optical correcting method of adjusting the inclination of a condensing lens included in a projection optical system within the projector without correcting a generating image in the video circuit.

There are descriptions on the prior arts for automatically correcting such keystone distortion in JP-A-2000-122617, JP-A-2001-339671 and JP-A-2002-62842.

The prior art described in JP-A-2000-122617 is to detect distances to the screen respectively by two active-type range-finding sensors provided in different positions on the front surface of a liquid-crystal projector. On the basis of two detected distances and the distance of between the two range-finding sensors, the inclination angle of the liquid-crystal projector relative to the screen is computed. On the basis of the computed inclination angle, the keystone distortion is corrected by the method as mentioned above.

The prior art described in JP-A-2001-339671 provides with an angle sensor circuit, such as gyro, on a projector or screen. On the basis of the angle information obtained from the circuit, correction is made for a horizontal (left-right) keystone distortion, vertical (up-down) keystone distortion or horizontal-and-vertical combined keystone distortion.

The prior art described in JP-A-2002-62842 uses a camera to detect a position and inclination of a screen. The screen image taken by the camera is image-processed in a screen-position detecting section, to thereby detect a screen position and inclination. Depending upon the detected position and inclination of screen, a keystone distortion is corrected.

[Patent document 1]

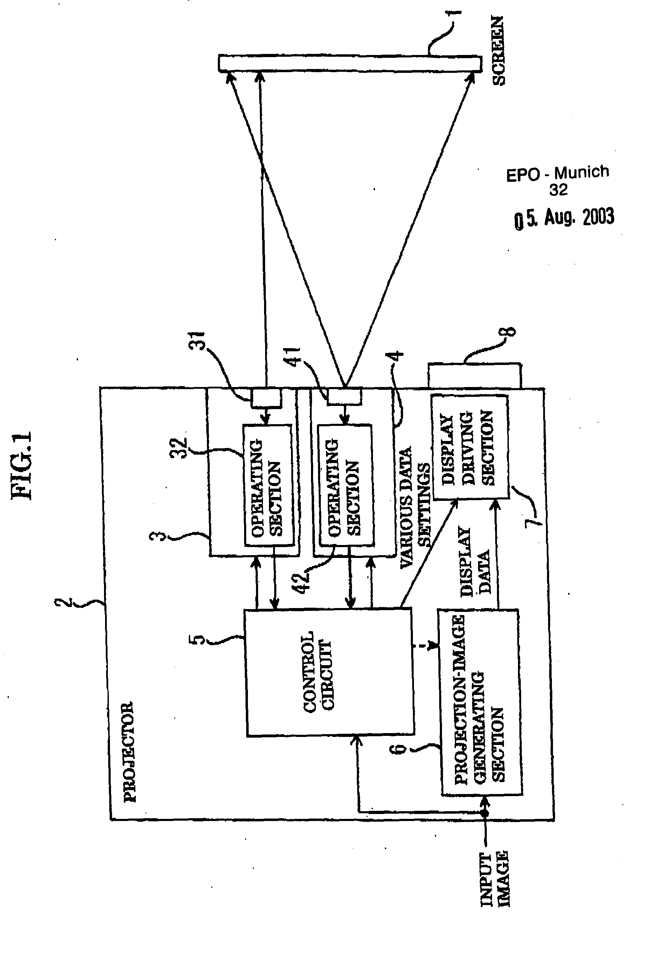

JP-A-2000-122617 (page 4, Fig. 1)

[Patent document 2]

JP-A-2001-339671 (page 3, Fig. 1)

[Patent document 3]

JP-A-2002-62842 (page 10, Fig. 1)

[Problem that the Invention is to Solve]

The prior art described in JP-A-2000-122617 uses a plurality of active-type range-finding devices in order to detect an inclination angle of the liquid-crystal projector relative to the screen. Because a light-emitting element exclusive for range finding is required separately from that for image projection, there is an increase in structure. Furthermore, there is a problem of requiring the power for causing light emission in the range-finding light-emitting element. Also, there occurs a problem that, in the case that the light of the range-finding light-emitting element does not reach within a range where a projection image of the projector is to reach or that the screen exists in a distance at which the range-finding light reflected upon the screen is weakened within the range a projection image of the projector is to reach, range-finding accuracy lowers resulting in worsening in the accuracy of detecting a liquid-crystal projector inclination angle relative to the screen. Also, because detection is possible only for a vertical inclination angle, correction is impossible for a keystone distortion caused due to horizontal inclination.

Contrary to this, the prior art described in JP-A-2001-339671, not using an active-type range-finding device, detects a horizontal and vertical inclination angle, hence not causing the foregoing disadvantage. Because angle sensors are provided on both the projector and the screen in order to detect a relative inclination angle of the projector and screen, there is caused a disadvantage to increase the structure.

The prior art described in JP-A-2002-62842 uses a camera to detect an inclination angle of the liquid-crystal projector relative to the screen. There is eliminated of the foregoing disadvantage in using an active-type range-finding device and the disadvantage of structural increase due to the provision of angular sensor on both the projector and the sensor. However, there is a disadvantage that a camera and a processing circuit are required for complicated image process in order to detect an inclination angle.

It is an object of the present invention to simplify the structure of an angle detecting apparatus not using a light-emitting element exclusive for angle detection and a projector having the same,

[Means for Solving the Problem]

A first invention is an angle detecting apparatus including: a line-type passive range-finding device having a pair of lenses arranged spaced a baseline length, a line sensor on which a pair of images of a subject-of-measurement are to be focused by the one pair of lenses, and an operating section for carrying out range-finding operation in a plurality of mutually different directions on the basis of an output of the line sensor; and an inclination-angle computing section for computing an inclination angle of the subject-of-measurement relative to a direction of the baseline length, on the basis of an operation result of the line-type passive range-finding device. According to this structure, it is possible to realize a simple angle detecting apparatus capable of utilizing a line-type passive range-finding device for utilization for the camera or the like.

A second invention is an angle detecting apparatus wherein, in the first invention, the inclination computing section computes an inclination angle of the subject-of-measurement relative to the baseline length direction, on the basis of an angle relative to each perpendicular to the baseline in the plurality of directions and an operation result of the line-type passive range-finding device. According to this structure, it is possible to realize a simple angle detecting apparatus capable of utilizing a line-type passive range-finding device for utilization for the camera or the like.

A third invention is an angle detecting apparatus wherein, in the first invention, the inclination computing section computes an inclination angle of the subject-of-measurement relative to the baseline length direction, on the basis of a contrast center-of-gravity position of each of the line sensors in the plurality of directions and an operation result of the line-type passive range-finding device. According to this structure, it is possible to realize a simple angle detecting apparatus capable of utilizing a line-type passive range-finding device for utilization for the camera or the like.

A fourth invention is an angle detecting apparatus wherein, in the first invention, the line sensor has a first light-receiving region on which one of the one pair of images of the subject-of-measurement is to focus and a second light-receiving region on which the other of the one pair of images is to focus, the first and second light-receiving regions being respectively set with a plurality of range-finding operating regions corresponding to the plurality of range-finding directions, the operating region carrying out range-finding operations in the plurality of range-finding directions, on the basis of an output of the line sensor in the range-finding operating region in the first light-receiving region and an output of the line sensor in the range-finding operating region in the second light-receiving region, the inclination-angle computing section computing an inclination angle of the subject-of-measurement relative to the baseline length direction, on the basis of an operation result in two range-finding directions of among operation results the line-type passive range-finding device carried out range-finding operation in the plurality of range-finding directions and a value dependent upon a distance of between two of the range-finding operating regions in the first light-receiving region corresponding to the two range-fining directions. According to this structure, it is possible to realize a simple angle detecting apparatus capable of utilizing a line-type passive range-finding device for utilization for the camera or the like.

A fifth invention is that, in the fourth invention, the value dependent upon a distance of between two of the range-finding operating regions in the first light-receiving region is a distance of center positions in the baseline length direction in each of the two range-finding operating regions. According to this structure, it is possible to easily detect a value dependent upon a distance of between two of the range-finding operating regions in the first light-receiving region to be used in angle detection, thus simplifying angle detection.

A sixth invention is that, in the fourth invention, the value dependent upon a distance of between two of the range-finding operating regions in the first light-receiving region is a distance of contrast center-of-gravity positions of images respectively focused in the two range-finding operating regions. According to this structure, angle detection is made possible for compensating for a delicate deviation in a range-finding direction resulting from a contrast position of an image focused in each range-finding operating region, thus improving angle detection accuracy.

A seventh invention is that the subject-of-measurement is a screen to which an image is to be projected. According to this structure, it is possible to detect an inclination angle of the screen relative to the baseline length direction.

An eighth invention is a projector for projecting an image formed based on an input video signal to a screen, including the angle detecting apparatus and an image-distortion correcting section for correcting a distortion in the image on the screen on the basis of an inclination angle computed by the angle detecting apparatus. According to this structure, it is possible to realize, by a simple structure, a distortion in an image depending upon a relative inclination angle of the projector and the screen.

A ninth invention is a projector that the angle detecting apparatus intermittently computes an inclination angle of the screen relative to the baseline length direction, the image-distortion correcting section correcting a distortion in the image on the screen on the basis of the intermittently computed inclination angle. According t this structure, because image distortion is corrected intermittently, even if there is a change in screen or projector setup situation and the like, distortion correction can be automatically made depending upon the change.

[Mode for Carrying Out the Invention]

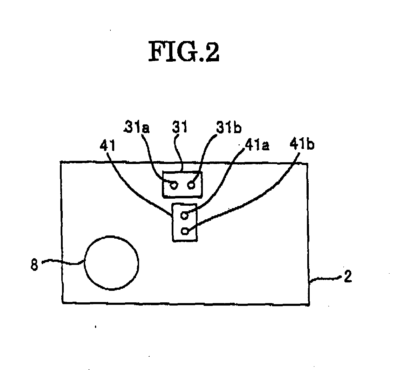

Hereunder, explanation is made on a mode for carrying out the invention, based on one embodiment shown in the figure, Fig. 1 is a figure showing an example of a projector which detects an inclination angle between a screen 1 and a projector 2 and corrects for a keystone distortion in an image projected to a screen 1 on the basis of the detected inclination angle. Fig. 2 is a front view of the projector 2, Incidentally, the inclination angle detecting apparatus is not limited to those provided the projector, and not limited to those for detecting an inclination angle relative to a screen.

In Fig. 1, a first line-type passive range-finding device 3 has an imaging section 31 having a pair of lenses 31a, 31b shown in Fig. 2, and a pair of line sensors 31c, 31d, hereinafter referred, as first line sensors to be focused a pair of images of a screen 1 as a subject-of-measurement on by a pair of lenses 31a, 31b, and an operating section 32 for carrying out range-finding operation in a plurality of mutually different directions on the basis of an output of the one pair of line sensors 31c, 31d, thereby detecting distances to the screen 1 at a plurality of horizontal (left-right) points. The one pair of lenses 31a, 31b are arranged horizontally spaced a first baseline length b.

A second line-type passive range-finding device 4 has a pair of lenses 41a, 41b shown in Fig. 2 and an imaging section 41 having a pair of line sensors 41c, 41d, hereinafter referred, as second sensors to be focused a pair of images of the screen 1 on by a pair of lenses 41a, 41b, and an operating section 42 for carrying out range-finding operation in a plurality of mutually different directions on the basis of an output of the one pair of line sensors 41c, 41d, thereby detecting distances to the screen 1 at a plurality of vertical (up-down) points. The one pair of lenses 41a, 41b are arranged vertically spaced a second baseline length b'.

A control circuit 5 as first and second inclination angle computing section carries out various controls and operations, e.g. computes a relative horizontal inclination angle of the screen 1 and projector 2 (in a first baseline direction) on the basis of a range-finding operation result of the line-type passive range-finding device 3, and a relative vertical inclination angle of the screen 1 and projector 2 (in a second baseline direction) on the basis of a range-finding operation result of the line-type passive range-finding device 4.

A projection image generating section 6 inputs image data output from an image data output section of an external personal computer or the like, and converts the image data into display data and outputs it to a display driving section 7.

The display driving section 7, as an image distortion correcting section, adjusts a projection optical system 8 including a condensing lens on the basis of a horizontal and a vertical inclination angle computed by a control circuit 5, thereby correcting for a keystone distortion in a projection image.

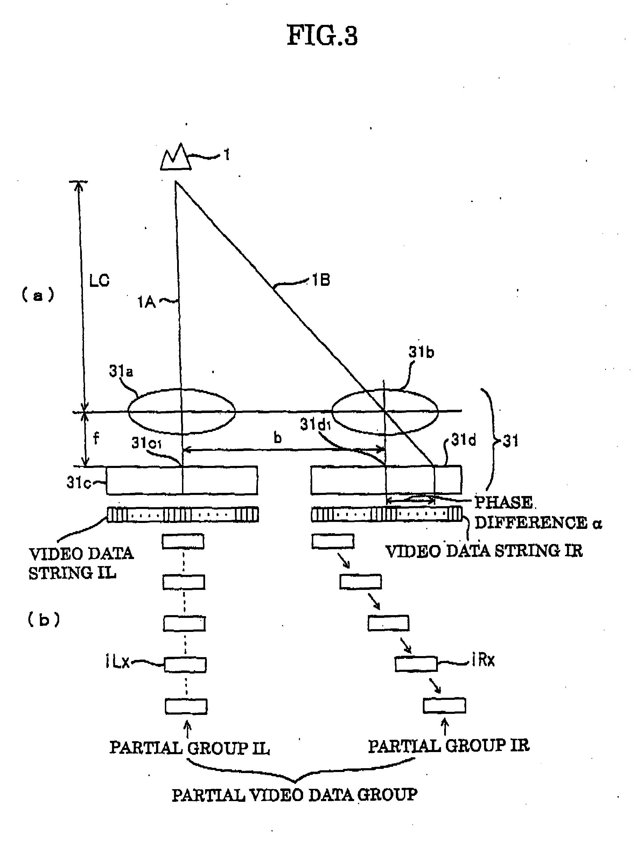

Next, referring to Fig. 3, explanation is made on the operation principle of the line-type passive range-finding devices (external-light trigonometric range-finding scheme) 3, 4. Incidentally, although the line-type passive range-finding device 3 and the line-type passive range-finding device 4 are different in the installation angle, they are of the same structure and this example explains only on the line-type passive range-finding device 3 in order to simplify explanation. Incidentally, if explaining the structural corresponding relationship, the one pair of lenses 41a, 41b of the line-type passive range-finding device 4 corresponds to the one pair of lenses 31a, 31b of the line-type passive range-finding device 3, the one pair line of sensors 41c, 41d of the line-type passive range-finding device 4 corresponds to the one pair of line sensors 31c, 31d of the line-type passive range-finding device 3, the imaging section 41 of the line-type passive range-finding device 4 corresponds to the imaging section 31 of the line-type passive range-finding device 3, and the operating section 42 of the line-type passive range-finding device 4 corresponds to the operating section 32 of the line-type passive range-finding device 3.

In the same figures the one pair of lenses 31a, 31b is arranged spaced a predetermined baseline length b, to focus respective images of the subject-of-measurement (screen) 1, through mutually different optical paths 1A and 1B, onto the one pair of optical sensor arrays 31c and 31d arranged spaced a focal length f from the pair of lenses 31a and 31b. The subject-of-measurement 1 assumably exists in a frontward position distant a distance LC from the one pair of lenses 31a, 31b.

When the subject-of-measurement 1 exists in an infinite distant position, an image center focused on the one pair of optical sensor arrays 31c and 31d is focused at a reference position (31c1, 31d1) corresponding to an optical axis of lenses 31a, 31b on the optical sensor array 31c, 31d. When the subject-of-measurement 1 comes nearer than the infinite distant position, focusing is at a position deviated $\alpha$ from these reference positions (31c1, 31d1). From the principle of trigonometric rang-finding, the distance LC to the subject-of-measurement 1 is given as $LC = b\,f/\alpha$. Herein, because the baseline length b and the focal length f are constants, detecting a deviation amount $\alpha$ makes it possible to measure the distance LC. This is the operation principle of the passive-type range-finding device for external-light trigonometric range-finding, whose operation is to be carried out by the operating section 32.

The deviation amount $\alpha$ from the reference position is detected by a correlation operation the operating section 32 shown in Fig. 1 carries out on the partial image data groups iL, iR extracted respectively from a pair of image signals (image data strings) IL, IR output from the one pair of line sensors 31c, 31d. Although this correlation operation is well known and omits some details of explanation, it schematically is an operation to detect the regions highest in coincidence degree when the partial image data group iL, iR is superposed as shown in Fig. 3 while relatively deviating the superposing partial image data group iL, iR in an arrangement direction of an optical sensor array.

Incidentally, when performing correlation operation, by fixing one partial image data group iL as a bench mark part depending upon a reference position as shown in Fig. 3 and deviating the other partial image data group iR as a reference part, the optical axis direction of lens 31a can be taken as a range-finding direction. However, in the case that the range-finding direction is taken as a direction from a center position of the both lens, the one partial image data group iL and the other partial image data group iR may be relatively deviated.

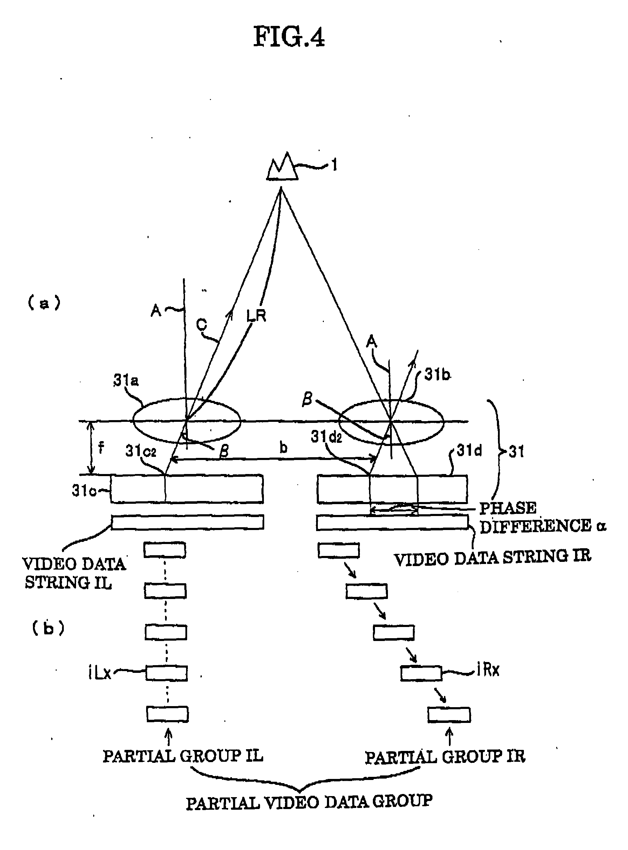

Next, referring to Fig. 4, explanation is made on a range-finding principle of the line-type passive range-finding device in a case a direction different from the front is taken as a range-finding direction.

In the same figure, assuming that an image focused on the one pair of optical sensor arrays 31c and 31d when the subject-of-measurement 1 exists in an infinite distant position in a direction C to be measured has a center taken as a reference position (31c2, 31d2), when the subject-of-measurement 1 comes nearer than the infinite distant position in the range-finding direction C, an image of subject-of-measurement 1 is focused at a position deviated a from the reference position (31c2, 31d2). From the trigonometric range-finding principle, the distance LR to the subject-of-measurement 1 is $LR = bf/(\alpha \cos \beta)$. Incidentally, the angle $\beta$ is an inclination angle, in the range-finding direction C, of the baseline with respect to a perpendicular A, which is an angle to be fixed by determining the measuring direction C. Herein, because the baseline length b, the focal length f and the $\cos \beta$ are constants, detecting a deviation amount $\alpha$ enables to measure a distance LR. This is the range-finding principle in the case of a range-finding direction different in direction from the front. Furthermore, the distance LR' of from a straight line extended with a baseline length to the subject-of-measurement 1 is $LR' = LR \cos \beta - bf/\alpha$. In case detecting a deviation amount $\alpha$ similarly to the above, the distance LR' can be measured, wherein the angle $\beta$ is unnecessary in determining LR'.

Incidentally, in also this case, when performing correlating operation, by fixing one partial image data group iL as a bench mark part as shown in Fig. 4 and deviating the other partial image data group IR as a reference part, the direction C deviated an angle $\beta$ relative to an optical axis of the lens 31a can be taken as a range-finding direction. Accordingly, by setting a plurality of bench mark positions in accordance with a range-finding direction, it is possible to detect distances in a plurality of directions by one line-type passive range-finding device.

This example is to detect relative inclination angles of the screen 1 and projector 2 by utilizing the line-type passive range-finding devices 3, 4.

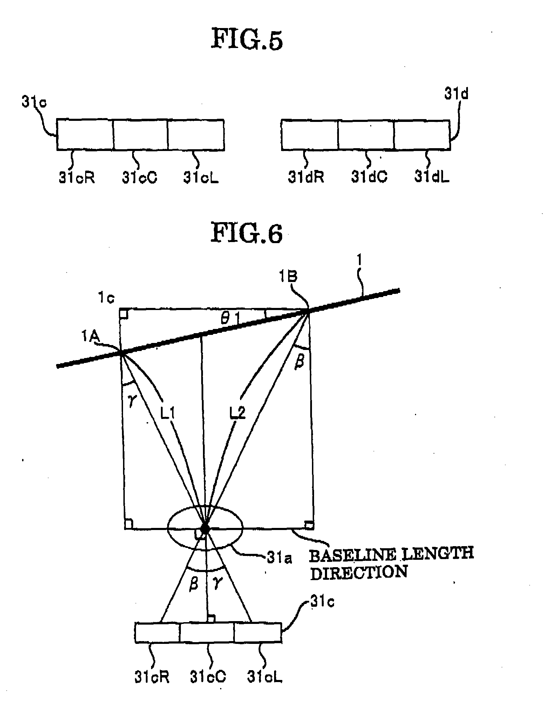

Incidentally, when carrying out range-finding in a plurality of directions by one line-type passive range-finding device, provided are a plurality of range-finding operating regions (31cR, 31cC, 31cL) depending upon a plurality of bench mark positions based on a plurality of range-finding directions (assumably R (right), C (center), L (left) in this example) in the line sensor 31c as shown in Fig. 5 and a plurality of range-finding operating regions (31dR, 31dC, 31dL) depending upon a plurality of reference positions based on a plurality of range-finding directions (R, C, L) in the line sensor 31d, to determine a deviation amount from the reference position by using the partial image data in one pair of range-finding regions (31cR and 31dR, 31cC and 31dC, 31cL and 31dL) in correspondence in the range-finding direction. Incidentally, although this example takes range-finding directions of three directions of R (right), C (center) and L (left), the range-finding direction is not limited to those but can be appropriately changed.

Next, the operation is explained.

In case power or the like is turned on, a control circuit 5 determines whether or not there is an input of image data. In case there is an input of image data, a projection-image generating section 6 is caused to output display data commensurate with the image data, to project an image on the screen 1 through a display driving section 7 and projection optical system 8. In case there is no input of image data, the contrast image data previously stored within the control circuit 5 for adjustment is output to the projection-image generating section 6, to project an image commensurate with the data on the screen 1. This operation is an operation to display a contrast image on the screen 1, in order to prevent the deterioration in the range-finding accuracy of the line-type passive range-finding device 3, 4. In this manner, the projection for preventing the line-type passive range-finding device 3, 4 from deteriorating in range-finding accuracy (inclination angle detection) is carried out by utilizing the image projecting function herein. This makes unnecessary an exclusive projection section, making possible to simplify the structure, Meanwhile, because range-finding is based on image projection, the measurable distance is dependent upon a distance that projection is possible. Accordingly, there is no need to adjust between a range-finding limit distance and a projection limit distance.

Subsequently, the control circuit 5 operates the line-type passive range-finding devices 3, 4 so that each is caused to detect a distance to the screen 1 in a plurality of directions.

The control circuit 5 computes a relative horizontal (first baseline-length direction) inclination angle between the screen 1 and projector 2 on the basis of a range-finding computation result of the line-type passive range-finding device 3, and computes a relative vertical (second baseline-length direction) inclination angle between the screen 1 and projector 2 on the basis of a range-finding computation result of the line-type passive range-finding device 4.

Fig. 6 is a view for explaining an example of computing inclination angles as mentioned above. Incidentally, this example includes those for inclination angle detection in a horizontal (left-right) direction, inclination angle detection in a vertical (up-down) direction or combined inclination angle detection in horizontal and vertical directions. However, because understanding is possible on the similar scheme, from now on explanation is on a horizontal inclination angle detection using a line-type passive range-finding device 3.

As shown in Fig. 6, provided that the inclination angle of the screen 1 relative to a baseline length direction (horizontal direction of the projector 2) of the line-type passive range-finding device 3 is $\theta 1$, the result of range-finding operation using a range-finding operating region 31cL is L1, the result of range-finding operation using a range-finding operating region 31cR is L2, the angle between a range-finding direction corresponding to the range-finding operating region 31cR and a perpendicular to the baseline length is $\beta$, and the angle between a range-finding direction corresponding to the range-finding operating region 31cL and a perpendicular to the baseline length is $\gamma$, then the inclination angle $\theta 1$ can be determined by:

$$\tan \theta 1 = (L2 \cos \beta - L1 \cos \gamma) / (L1 \sin \gamma + L2 \sin \beta).$$

Incidentally, the angles $\beta$, $\gamma$ are constants to be determined in a design stage or the like as stated before, the values of which are previously stored within the control circuit 5.

It is possible to determine an inclination angle $\theta 2$ of the screen 1 relative to a baseline length direction (vertical direction to the projector 2) of line-type passive range-finding device 4, by a principle similar to the above.

Accordingly, the inclination angle $\theta 1$ and $\theta 2$ can be determined by such operation of the control circuit 5.

In this manner, it is possible to realize a simple inclination-angle detecting apparatus utilizing a line-type passive range-finding device for utilization for the camera or the like.

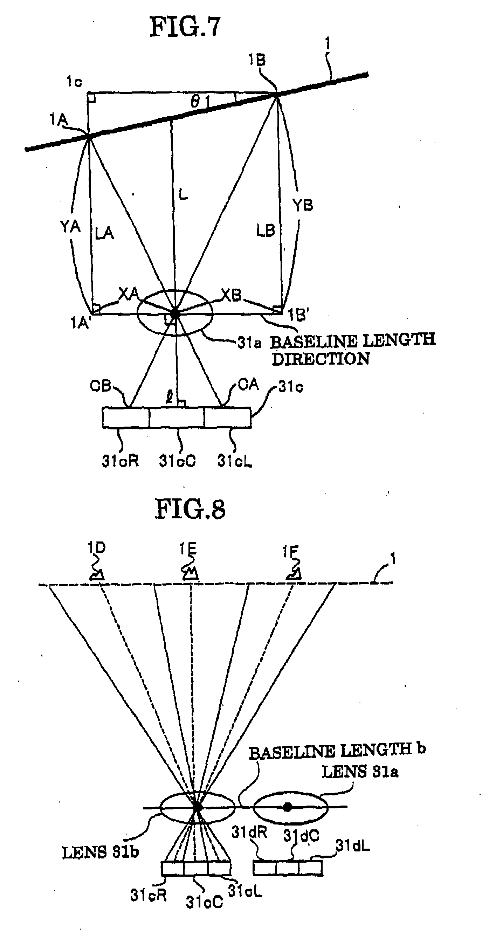

Next, another embodiment of the invention is explained with reference to Fig. 7 . Fig. 7 is a view for explaining another example of computing an inclination angle as mentioned above. Incidentally, this embodiment explains only on computing an inclination angle, wherein the same structure as the above embodiment is attached with the same reference, to omit the explanation thereof. Meanwhile, this embodiment includes those for inclination angle detection in a horizontal (left-right) direction, inclination angle detection in a vertical (up-down) direction or combined inclination angle detection in horizontal and vertical directions. However, because understanding is possible on the similar scheme, from now on explanation is on a horizontal inclination angle detection using a line-type passive range-finding device 3.

As shown in Fig. 7, provided that the inclination angle of the screen 1 relative to a baseline length direction (horizontal direction of the projector 2) of the line-type passive range-finding device 3 is $\theta 1$, the straight line passing a range-finding point 1A on the screen 1 and parallel with an optical axis L is LA, the straight line passing a range-finding point 1B on the screen 1 and parallel with an optical axis L is LB, the intersection between the baseline length and the straight line LA is 1A', the intersection between the baseline length and the straight line LB is 1B', the distance between the point 1A' and the perpendicular to an optical axis L is XA, the distance between the point 1B' and the perpendicular to optical axis L is XB, the result of range-finding operation using the range-finding operating region 31cL is YA and the result of range-finding operation using the range-finding operating region 31cR is YB, then the inclination angle $\theta 1$ can be determined by:

$$\tan \theta 1 = (YB - YA) / (XA + XB).$$

Herein, YA : XA- f : P (CA- I) is held because of triangular analogy. If this is expanded, we have XA = PYA (CA - I) / f. Herein, CA is a pixel number corresponding to a position of contrast center-of-gravity of an area A focused on the sensor plane, I is a pixel number of line sensor corresponding to the optical axis, P is a pixel pitch of line sensor, and f is a focal length. Similarly, XB can be expressed by:

XB = PYB (CB - I) / f. Herein, CB is a pixel number corresponding to a position of contrast center-of-gravity of an area B focused on the sensor plane. Incidentally, P and f are constants to be determined in the design stage or the like, the values of which are previously stored within the control circuit 5.

It is possible to determine an inclination angle $\theta 2$ of the screen 1 relative to a baseline length direction (vertical direction to the projector 2) of line-type passive range-finding device 4, by a principle similar to the above.

Accordingly, the inclination angle $\theta 1$ and $\theta 2$ can be determined by the operation of the control circuit 5.

In this manner, it is possible to realize a simple inclination-angle detecting apparatus utilizing a line-type passive range-finding device for utilization in the camera or the like.

Now, another embodiment of the invention is explained with reference to Figs . 8 - 12 , Figs . 8 to 12 are figures for explaining another example to compute an inclination angle stated above. Note that this embodiment explains only on computing an inclination angle wherein the same structures as the above embodiment are attached with the same references, to omit the explanation. Meanwhile, this example includes those for inclination angle detection in a horizontal (left-right) direction, inclination angle detection in a vertical (up-down) direction or combined inclination angle detection in horizontal and vertical directions. However, because understanding is possible on the similar scheme, from now on explanation is on a horizontal inclination angle detection using a line-type passive range-finding device 3.

Fig. 8 is a figure for explaining a previous adjusting process on the line-type passive range-finding device 3 within the projector. The line-type passive range-finding device 3 used in this embodiment, in the case of taking the range-finding direction by a different direction from the front, assumably outputs , as a result of the range-finding computation, a distance of from a straight line the baseline length is extended to the subject-of-measurement 1 instead of the normal distance. Consequently, in the case of range-finding the subject-of-measurement 1D, 1E and 1F on a chart 1 parallel with a baseline length b direction as in Fig. 8, the range-finding operation results (phase difference) to the subject-of-measurements 1D, 1E, 1F are ideally to be the same. However, actually, the same result is less obtainable because of undergoing the effects of aberration in each range-finding operating region or the like. Consequently, this embodiment previously computes the correction coefficients to make these operation results the same in each range-finding direction. The correction coefficients are stored in an EEPROM or the like within the operating section, so that, during range-finding operation, the correction coefficient is utilized to correct for the variation in range-finding operation results. Accordingly, in the case of range-finding the subject-of-measurement 1 on a straight line parallel with the baseline length b direction, the same operation result, i.e. distance of from a straight line the baseline length is extended to the subject-of-measurement 1, is obtainable even if range-finding is in any direction of range finding (range-finding operating region).

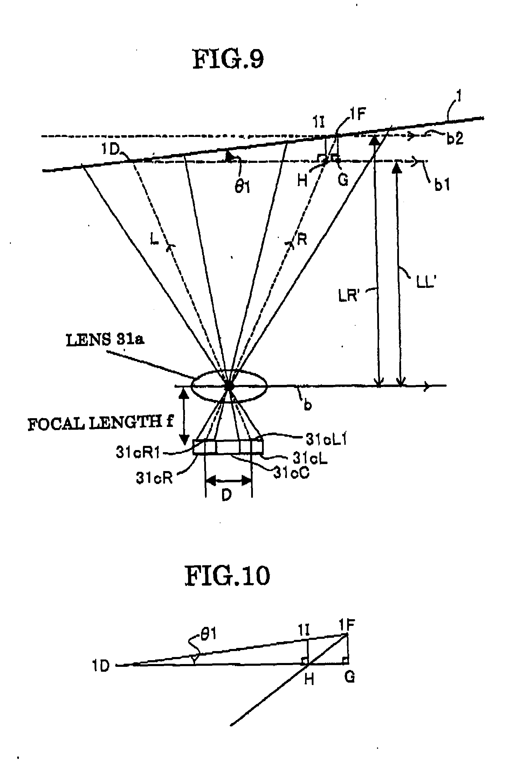

Fig. 9 shows an example on a case of range-finding the screen 1 inclined an angle (inclination angle) θ1 relative to the baseline length b direction (horizontal direction of projector 2) by using the line-type passive range-finding device 3 adjusted as in the above. The range-finding operation result when using a range-finding operation region 31cR is LR'. The range-finding operation result when using a range-finding operation region 31cL is LL'. The straight line passing a range-finding point 1D on the screen 1 and parallel with the baseline length b is b1. The straight line passing a range-finding point 1F on the screen 1 and parallel with the baseline length b is b2. The intersection between a perpendicular to the straight line b1 passing the range-finding point 1F and the straight line b1 is G. The intersection between a range-finding direction R and the straight line b1 is H. The intersection between a perpendicular to the straight line b1 passing a point H and the screen 1 is 1I. And the distance between the range-finding operation regions 31cR and 31cL is D. Incidentally, in this embodiment, the intersection between a range-finding direction R and a range-finding operation region 31cR is 31cR1. The intersection between a range-finding direction L and a range-finding operation region 31cL is 31cL1, And the distance between a point 31 and a point 31cL1 is a distance D.

In this situation, the distance between a range-finding point 1F and a point G is LR' - LL'. Namely, it is a difference between a distance LR' and a distance LL'.

Herein, as shown in Fig. 10, where the angle θ1 is small, the distance between the range-finding point 1F and the point G and the distance between the point H and the point 11 are nearly equal, the distance between the point H and the point 1I is nearly equal to LR' - LL'. Herein, the angle θ1 in this embodiment is an inclination angle between the projector 2 and the screen 1. According to projecting a projection image of the projector 2 on the screen 1, it cannot be considered that the angle θ1 is excessively great. There is no significant problem if the distance between the point H and the point 1I is practically considered as LR' - LL', For example, in the case to project a portable projector 2 onto the screen 1 or so, the user sets up the projector. It can be considered that a rough angular adjustment of the both is usually carried out by user's setting up.

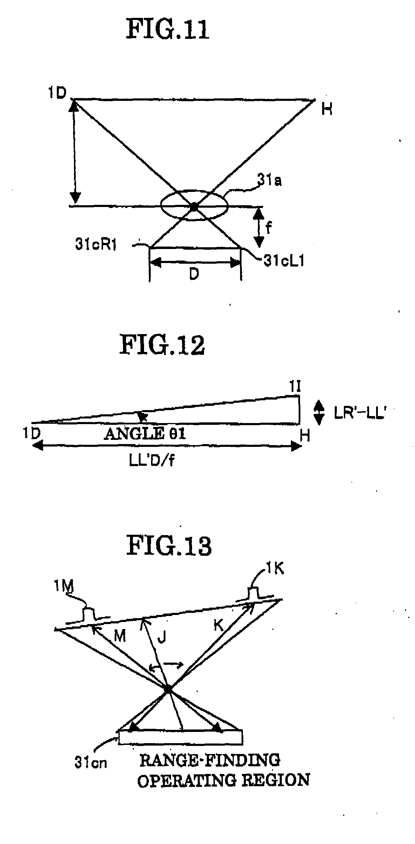

Meanwhile, as shown in Fig. 11, because the triangle formed by a range-finding point 1D, a point H and a center of lens 31a is analogous to the triangle formed by a point 31cR1, a point 31cL1 and the center of lens 31a, the distance between the range-finding point 1D and the point H is LL' D/f.

Accordingly, as shown in Fig, 12, from the rectangular triangle configured by the range-finding point 1D, the point H and the point 1I, the inclination angle θ1 can be determined from

$$\theta1 = \arctan((LR' - LL') / (LL' D/f)).$$

Incidentally, although in the above the distance D between the range-finding operating regions 31cR and 31cL is a distance between the point 31cR1 and the point 31cL1, it may be a distance between a center position of range-finding operating region 31cR in a baseline length direction and a center position of range-finding operating region 31cL in a baseline length direction. In this case, there is no need to detect an intersection with a range-finding direction on the range-finding operating region, making it possible to easily detect a value depending upon a distance between the two range-finding operating regions for use in angular detection. Thus, angle detection is simplified.

Incidentally, in the case that high accuracy is required in angle detection, the value dependent upon a distance between the two range-finding operating regions for use in angular detection may use a distance between contrast center-of-gravity positions in each range-finding operating region. In the below, an example on this case is explained with reference to Fig. 13.

As well known, although passive-type range finding includes an operation to detect a state the coincident degree becomes the highest when a pair of images are superposed, the coincident degree is to detect whether the one pair of images are in coincident in contrast state or not.

Accordingly, in passive-type range finding, a certain one range-finding operating region 31cn has a design range-finding direction in an arrow-J direction, as shown in Fig. 13. In the case the image of the subject of range finding 1 to be focused on the range-finding operating region 31cn is an image that a contrast position 1K exists only in an arrow-K direction, the actual direction of range finding deviates from the arrow-J direction to the arrow-K direction. In the case the image of the range finding subject 1 to be focused on the range-finding operating region 31cn is an image that a contrast position 1M exists only in an arrow-M direction, the actual direction of range finding deviates from the arrow-J direction to the arrow-M direction. Meanwhile, in the case the image of the range finding subject 1 to be focused on the range-finding operating region 31cn is an image that contrast positions 1K and 1M exist in arrow-K and arrow-M directions, the actual direction of range finding deviates from the arrow-J direction to a contrast center-of-gravity position of an image focused on the range-finding operating region 31cn.

Accordingly, in case the value dependent upon a distance between the two range-finding operating regions for use in angular detection uses a distance between the contrast center-of-gravity positions in each range-finding operating region, it is possible to use an accurate distance D thereby improving angle detection accuracy. Incidentally, because how to determine a contrast center-of-gravity position is known by JP-A-8-75985, the explanation thereof is omitted herein.

In this manner, it is possible to realize a simple inclination-angle detecting apparatus utilizing a line-type passive range-finding device for utilization in the camera or the like,

In each of the above embodiment, in case inclination angles θ1 and θ2 are determined, the control circuit 5 outputs the determined inclination angles θ1 and θ2 to the display driving section 7. The display driving section 7 adjusts the projection optical system 8 including a capacitor lens on the basis of the horizontal and vertical inclination angles computed by the control circuit 5, thereby correcting for a keystone distortion in a projection image.

Herein, the keystone distortion in a projection image is optically corrected by adjusting the projection optical system 8 including a condensing lens on the basis of the horizontal and the vertical inclination angles computed by the control circuit 5. The display data of an image having a reverse keystone distortion to a projection image may be generated on the basis of the horizontal and vertical inclination angles computed by the control circuit 5 in the projection image generating section 6 in order to electrically, correct the keystone distortion in the projection image.

The control circuit 5, if inclination angles θ1 and θ2 are determined, stops the line-type passive range-finding devices 3, 4 from operating, thereby ending angle detecting operation and keystone distortion correcting operation.

Incidentally, the control circuit 5, after once determining the inclination angles θ1 and θ2, causes the line-type passive range-finding devices 3, 4 again to operate at a time elapsing a predetermined time, to again detect inclination angles θ1 and θ2. On the basis of the detected inclination angles θ1 and θ2, keystone distortion correcting operation may be again carried out. By doing so, image distortion is corrected intermittently. Accordingly, even where the screen or projector changes in setup situation or the like, distortion correction can be automatically done in accordance with a change thereof.

As in the above, the image distortion correction depending upon a relative inclination angle between the projector and the screen can be realized by a simple structure utilizing a line-type passive range-finding device for utilization in the camera or the like.

Incidentally, in each of the above embodiments, inclination angle is detected in a plurality of directions by using two line-type passive range-finding devices, to carry out keystone distortion on the basis of each detection result. However, it is possible to use one line-type passive range-finding device and detect an inclination angle in one direction, so that keystone distortion can be corrected on the basis of a detected one inclination angle.

Also, although inclination angle was detected in vertical-and-horizontal two directions as a plurality of different directions by two line-type passive range-finding devices, the plurality of different directions are not limited to the vertical and the horizontal directions but can be changed appropriately.

Meanwhile, although subject-of-measurement was the screen, subject-of-measurement is not limited to the screen but to be changed appropriately.

Meanwhile, the present invention is not limited to the foregoing embodiments but can be carried out with a proper change of within a scope not to change the gist.

[Effect of the Invention]

The present invention can simplify the structure for the simple inclination-angle detecting apparatus capable of utilizing a line-type passive range-finding device being used in the camera or the like, or for the projector for correcting a keystone distortion depending upon an inclination angle to the screen in a projection image.

[Brief Description of the Drawings]

[Fig. 1]

A block diagram showing one embodiment of the present invention.

[Fig. 2]

A front view of one embodiment shown as Fig. 1

[Fig. 31

A figure showing a range-finding principle of a line-type passive range-finding device of Fig. 1.

[Fig. 4]

A figure showing a range-finding principle of a line-type passive range-finding device of Fig. 1.

[Fig. 5]

A figure showing a plurality of range-finding operating regions for one pair of line sensors 31c, 31d of this example.

[Fig. 6]

A figure showing a detecting scheme of an inclination angle of Fig. 1.

[Fig. 7]

A figure showing a detecting scheme of an inclination angle in another embodiment of the invention.

[Fig. 8]

A figure showing a detecting scheme of an inclination angle in another embodiment of the invention.

[Fig. 9]

A figure showing a detecting scheme of an inclination angle in another embodiment of the invention.

[Fig. 10]

An essential-part magnifying view of Fig. 9.

[Fig. 11]

An essential-part magnifying view of Fig. 9.

[Fig. 12]

An essential-part magnifying view of Fig. 9.

[Fig. 13]

An explanatory view of a contrast center-of-gravity position.

[Explanation of Reference Numerals and Signs]

| | |
|---|---|
| 3 | First line-type passive range-finding device |
| 31a, 31b | First one pair of lenses |
| 31c, 31d | First line sensors |
| 32 | First operating section |
| 4 | Second line-type passive range-finding device |
| 41a, 41b | Second one pair of lenses |
| 41c, 41d | Second line sensors |
| 42 | Second operating section |
| 5 | First, second inclination angle computing section |
| 6 | Image-distortion correcting section |
| 7 | Image-distortion correcting section |

**Claims**

1. An angle detecting apparatus **characterized by**:

   a line-type passive range-finding device having a pair of lenses arranged spaced a baseline length, a line sensor on which a pair of images of a subject-of-measurement are to be focused by the one pair of lenses, and an operating section for carrying out range-finding operation in a plurality of mutually different directions on the basis of an output of the line sensor; and an inclination-angle computing section for computing an inclination angle of the subject-of-measurement relative to a direction of the baseline length, on the basis of an operation result of the line-type passive range-finding device.

2. An angle detecting apparatus as claimed in claim 1, **characterized in that** the inclination-angle computing section computes an inclination angle of the subject-of-measurement relative to the baseline length direction, on the basis of an angle relative to each perpendicular to the baseline in the plurality of directions and an operation result of the line-type passive range-finding device.

3. An angle detecting apparatus according to claim 1, **characterized in that** the inclination-angle computing section computes an inclination angle of the subject-of-measurement relative to the baseline length direction, on the basis of a contrast center-of-gravity position of each of the line sensors in the plurality of directions and an operation result of the line-type passive range-finding device.

4. An angle detecting apparatus according to claim 1, **characterized in that** the line sensor has a first light-receiving region on which one of the one pair of images of the subject-of-measurement is to focus and a second light-receiving region on which the other of the one pair of images of the subject-of-measurement is to focus, the first and second light-receiving regions being respectively set with a plurality of range-finding operating regions corresponding to the plurality of range-finding directions,

the operating region carrying out range-finding operations in the plurality of range-finding directions, on the basis of an output of the line sensor in the range-finding operating region in the first light-receiving region and an output of the line sensor in the range-finding operating region in the second light-receiving region,

the inclination-angle computing section computing an inclination angle of the subject-of-measurement relative to the baseline length direction, on the basis of an operation result in two different range-finding directions of among operation results the line-type passive range-finding device carried out range-finding operation in the plurality of range-finding directions and a value dependent upon a distance of between two of the range-finding operating regions in the first light-receiving region corresponding to the two range-fining directions.

5. An angle detecting apparatus according to claim 4, **characterized in that** the value dependent upon a distance of between two of the range-finding operating regions in the first light-receiving region is a distance of center positions in the baseline length direction in each of the two range-finding operating regions.

6. An angle detecting apparatus according to claim 4, **characterized in that** the value dependent upon a distance of between two of the range-finding operating regions in the first light-receiving region is a distance of contrast center-of-gravity positions of images respectively focused in the two range-finding operating regions.

7. An angle detecting apparatus according to claims 1 to 6, **characterized in that** the subject-of-measurement is a screen to which an image is to be projected.

8. A projector for projecting an image formed based on an input video signal to a screen, **characterized by** including an angle detecting apparatus according to 7 and an image-distortion correcting section for correcting a distortion in the image on the screen on the basis of an inclination angle computed by the angle detecting apparatus.

9. A projector according to claim 8, **characterized in that** the angle detecting apparatus intermittently computes an inclination angle of the screen relative to the baseline length direction, the image-distortion correcting section correcting a distortion in the image on the screen on the basis of the intermittently computed inclination angle.

# FIG.1

EP 1 391 778 A1

# FIG.2

# FIG.3

# FIG.4

(a)

(b)

VIDEO DATA STRING IL

VIDEO DATA STRING IR

PHASE DIFFERENCE α

iLx

iRx

PARTIAL GROUP IL          PARTIAL GROUP IR

PARTIAL VIDEO DATA GROUP

# FIG.5

# FIG.6

# FIG.7

31a BASELINE LENGTH DIRECTION

# FIG.8

BASELINE LENGTH b
LENS 31a

LENS 31b

16

## FIG.9

## FIG.10

# FIG.11

1D

H

31a

31cR1

f

31cL1

D

# FIG.12

1I

LR'−LL'

1D

ANGLE θ1

H

LL'D/f

# FIG.13

1K

1M

M

J

K

31cn

RANGE-FINDING
OPERATING REGION

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 455 647 A (FUJIWARA AKIHIRO) 3 October 1995 (1995-10-03) * the whole document * --- | 1-9 | G03B21/53 G02B7/30 G01C3/10 H04N5/74 G03B7/28 |
| Y | US 6 263 164 B1 (SATO TAKUMA ET AL) 17 July 2001 (2001-07-17) * column 19 - column 22 * * column 11 - column 12 * * figures 5-8 * --- | 1-9 | |
| Y | US 6 038 405 A (KAGEYAMA KAZUMI) 14 March 2000 (2000-03-14) * column 6, line 54 - column 7, line 22; figure 6 * --- | 3,6 | |
| Y | PATENT ABSTRACTS OF JAPAN vol. 017, no. 224 (P-1530), 10 May 1993 (1993-05-10) & JP 04 355740 A (HITACHI LTD;OTHERS: 01), 9 December 1992 (1992-12-09) * abstract * ----- | 7,8 | |

**TECHNICAL FIELDS SEARCHED** (Int.Cl.7)

G03B
G02B
G01C
H04N

The present search report has been drawn up for all claims

| Place of search | Date of completion of the search | Examiner |
|---|---|---|
| MUNICH | 6 October 2003 | Rückerl, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 01 7900

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2003

| Patent document cited in search report | | Publication date | Patent family member(s) | | Publication date |
|---|---|---|---|---|---|
| US 5455647 | A | 03-10-1995 | JP | 4181935 A | 29-06-1992 |
| US 6263164 | B1 | 17-07-2001 | JP | 8262317 A | 11-10-1996 |
| | | | JP | 8285580 A | 01-11-1996 |
| | | | JP | 8286228 A | 01-11-1996 |
| | | | JP | 8327883 A | 13-12-1996 |
| | | | JP | 8327884 A | 13-12-1996 |
| | | | US | 5923910 A | 13-07-1999 |
| | | | DE | 19606694 A1 | 26-09-1996 |
| | | | DE | 19655197 C2 | 28-11-2002 |
| | | | DE | 19655198 C2 | 28-11-2002 |
| | | | DE | 19655199 C2 | 05-06-2003 |
| | | | DE | 19655200 C2 | 05-12-2002 |
| | | | DE | 19655202 C2 | 05-12-2002 |
| | | | DE | 19655203 C2 | 05-06-2003 |
| | | | DE | 19655204 C2 | 21-11-2002 |
| | | | FR | 2730829 A1 | 23-08-1996 |
| | | | GB | 2298331 A ,B | 28-08-1996 |
| | | | GB | 2338133 A ,B | 08-12-1999 |
| | | | GB | 2338134 A ,B | 08-12-1999 |
| | | | GB | 2338135 A ,B | 08-12-1999 |
| | | | GB | 2338136 A ,B | 08-12-1999 |
| | | | GB | 2338137 A ,B | 08-12-1999 |
| | | | GB | 2338138 A ,B | 08-12-1999 |
| | | | GB | 2338139 A ,B | 08-12-1999 |
| | | | JP | 8292364 A | 05-11-1996 |
| | | | US | 6088536 A | 11-07-2000 |
| | | | US | 6112030 A | 29-08-2000 |
| | | | US | 6070017 A | 30-05-2000 |
| | | | US | 6169855 B1 | 02-01-2001 |
| | | | US | 6081671 A | 27-06-2000 |
| | | | US | 6122450 A | 19-09-2000 |
| | | | JP | 8292367 A | 05-11-1996 |
| | | | JP | 8292365 A | 05-11-1996 |
| US 6038405 | A | 14-03-2000 | JP | 11109218 A | 23-04-1999 |
| JP 04355740 | A | 09-12-1992 | NONE | | |

For more details about this annex : see Official Journal of the European Patent Office, No. 12/82